# FASCICULE DE BREVET EUROPEEN

(11) **EP 1 379 342 B1**
(45) Date de publication et mention de la délivrance du brevet: **22.12.2004**
(21) Numéro de dépôt: 02748335.3
(22) Date de dépôt: 06.03.2002
(51) Int. Cl.: B21J 9/02, B21K 21/12, F16F 1/38

(54) **PROCEDE DE BOUTEROLLAGE D'UNE DOUILLE, NOTAMMENT D'UNE DOUILLE FORMANT UNE ARTICULATION ELASTIQUE ET DOUILLE ET ARTICULATION ELASTIQUES OBTENUES SELON CE PROCEDE**
VERFAHREN ZUM AUFWEITEN EINER BUCHSE, INSBESONDERE EINE BUCHSE EINES ELASTISCHEN GELENKES, SOWIE DADURCH ERHALTENE BUCHSE UND ELASTISCHES GELENK
METHOD FOR HEADING A BUSHING, PARTICULARLY A BUSHING FORMING AN ELASTIC ARTICULATION AND THE ELASTIC ARTICULATION AND BUSHING OBTAINED USING SAID METHOD

(30) Priorité: 06.03.2001 FR 0103060
(43) Date de publication de la demande: 14.01.2004
(73) Titulaire: Michelin AVS S.A.S., 78035 Versailles (FR)
(72) Inventeur: GAUTHERON, Michel, F-58000 Nevers (FR)
(74) Mandataire: Schmid, Nils T.F.
(86) Numéro de dépôt international: PCT/EP2002/002475
(87) Numéro de publication internationale: WO 2002/070170

(56) Documents cités:
- EP-A- 0 524 844
- PATENT ABSTRACTS OF JAPAN vol. 012, no. 416 (M-759), 4 novembre 1988 (1988-11-04) -& JP 63 154240 A (TOYOTA MOTOR CORP), 27 juin 1988 (1988-06-27)
- PATENT ABSTRACTS OF JAPAN vol. 011, no. 098 (M-575), 27 mars 1987 (1987-03-27) -& JP 61 248930 A (YAMASHITA RUBBER KK), 6 novembre 1986 (1986-11-06)

## Description

La présente invention a pour objet un procédé de bouterollage d'une douille. Une telle douille est en particulier utilisée pour former une articulation élastique. L'invention a également pour objet une douille obtenue selon ce procédé, ainsi qu'une articulation élastique obtenue à partir d'une telle douille. Sans qu'on puisse en déduire une quelconque limitation, l'invention sera décrite dans le cadre de la réalisation d'une telle douille utilisée pour former une articulation élastique. Les articulations élastiques concernées seront principalement des articulations porteuses, à installer dans une suspension d'un véhicule. De telles articulations élastiques comportent essentiellement une douille interne rigide engagée à l'intérieur d'un manchon élastique, par exemple en caoutchouc. Le procédé de réalisation concerné par l'invention est un procédé de bouterollage avec lequel une extrémité, mais de préférence les deux extrémités de la douille de l'articulation élastique sont formées pour mieux convenir à une utilisation qu'on en attend.

On connaît par la demande de brevet européen EP-A-0 524 844 un procédé de formage d'une surépaisseur aux extrémités de la douille interne d'une telle articulation élastique, notamment après un moulage qui permet d'adhériser le manchon élastique sur la douille. Différentes fonctions de ces articulations élastiques sont par ailleurs décrites dans ce document. Dans une variante préférée de réalisation d'une telle articulation élastique dans ce document, une bouterolle est introduite dans une extrémité creuse d'une douille d'une telle articulation, alors qu'une réaction est exercée à une autre extrémité de cette articulation. La bouterolle est ensuite mise en mouvement de roulement sur la périphérie de cette extrémité. Au cours de ce roulement, l'extrémité de la douille se déforme et la bouterolle provoque un épanouissement de cette extrémité. Cette extrémité comporte alors une forme en évasement circulaire, dont le plus grand diamètre est plus grand que le grand diamètre antérieur de la douille. On sait qu'un tel agrandissement de diamètre à cette extrémité est favorable à une meilleure répartition des efforts de fixation de la douille, notamment lorsqu'elle est prise en chape contre un flanc de tôle d'un châssis d'un véhicule.

Un perfectionnement de ce procédé de bouterollage, également décrit dans le document cité, prévoit la réalisation de dents sur un chant de l'extrémité en épanouissement de la douille qui doit entrer en contact avec ce flanc de tôle. De telles dents, orientées radialement par rapport à un axe de la douille, sont destinées à s'opposer à tout glissement de l'articulation élastique prise en chape par sa douille interne lorsque le serrage axial devient défaillant. Un élément saillant est alors constitué de cannelures radiales en relief, les dents. Ces dents sont marquées dans le métal de la douille rigide par des empreintes en creux portées par une face faiblement conique de la bouterolle. Ces empreintes s'impriment lors de la rotation d'une courte ligne d'appui de la bouterolle dans un plan défini par un axe oblique de la bouterolle qui effectue des révolutions autour d'un axe géométrique de l'articulation.

Avec des hauteurs de 0,3 à 1 mm, ces cannelures radiales en relief sont susceptibles, comme le font des nervures cylindriques saillantes, de s'imprimer dans la tôle en regard lors du serrage axial au montage. La tenue en rotation tout autant que la résistance aux efforts radiaux en sont nettement améliorés même sous faible serrage axial. On sait encore par l'enseignement du document cité ci-dessus, que les empreintes correspondant à ces cannelures, ou à des nervures circulaires d'éléments saillants, et qui figurent en creux dans le métal de grande dureté de la bouterolle, peuvent être obtenues par un meulage au cours de la fabrication de cette bouterolle. Ils viennent donc en relief sur la face plane d'extrémité de la douille interne rigide.

Dans le document cité, on indique que le marquage de ces empreintes se réalise sans glissement de la bouterolle au moment du formage de l'extrémité de la douille. Ceci se produit en particulier dans l'exemple décrit dans ce document, lorsque le nombre de dents en relief est important, par exemple 24. En effet, au moment de son roulement, la bouterolle s'imbrique successivement, sans glissement, dans chacune de ces dents et, au cours de la fabrication, ces dents s'érigent peu à peu en pénétrant dans les creux correspondants de la bouterolle. Plus le procédé s'approche de son terme, et moins le risque de glissement de la bouterolle par rapport à l'extrémité de la douille ne se présente.

Cependant, l'opération de serrage de la douille sur le flanc en tôle ne peut acquérir les qualités décrites ci-dessus que si les dents de cette douille pénètrent effectivement dans le flanc de tôle au moment du serrage. Or une telle pénétration n'est bien entendu possible que si ces dents ne sont pas trop rapprochées les unes des autres. En effet, si elles sont trop nombreuses, donc trop rapprochées, le flanc de tôle reste en quelque sorte plaqué contre la crête de ces dents, trop nombreuses, sans vraiment s'imbriquer entre ces dents. Plus ces dents sont nombreuses, plus la pression sur chaque dent est faible. On perd alors en pénétration. Une solution pour augmenter l'efficacité de ce serrage consisterait alors soit à augmenter le serrage lors du montage, mais ce n'est pas souhaitable du point de vue de la simplification du montage, soit à réduire le nombre de dents, par exemple en en réalisant le tiers ou le quart.

Malheureusement dans ce cas, on se heurte à un problème de fabrication. En effet, si les dents sont moins nombreuses, leur distance les unes par rapport aux autres sont agrandies, et c'est le but recherché pour favoriser la pénétration du flanc de tôle dans les dents. Cependant, le principe de formage avec une bouterolle implique une faible surface d'appui de la bouterolle au moment de son passage sur l'extrémité de la douille. Cette faible surface d'appui contribue à exercer des forces considérables sur le métal d'extrémité de la douille, ce qui a pour effet de le former. Il arrive dans ces conditions que cette surface d'appui, théoriquement limitée à une ligne d'appui, se trouve à un moment du formage située dans l'espace entre deux dents, sans qu'une dent précédente ou une dent suivante ne soit imbriquée dans la bouterolle. Celle-ci subit alors des effets assimilables à des glissements, de sorte que la bouterolle tend alors à marquer l'extrémité de la douille pour y réaliser une dent, à un autre endroit que celui où cette bouterolle avait commencé à marquer cette dent à une révolution précédente. De ce fait, au fur et à mesure que la bouterolle tourne, les dents, peu nombreuses, sont écrasées par le décalage de l'outil, d'un tour à l'autre. Aucune dent ne peut ainsi s'ériger. On se rend compte en agissant ainsi que ce procédé ne fonctionne que si un nombre minimum de dents est retenu. Le problème présenté dans ce cas est que, pour certaines applications, ce nombre minimum de dents est supérieur à un nombre maximum de dents utiles pour favoriser une bonne prise en chape de la douille sans serrage exagéré.

Pour remédier à ce problème, il est possible d'augmenter le relief de cavités réalisées sur une face d'appui de la bouterolle de façon à marquer plus profondément les dents à chaque passage. Dans ce cas, plus les dents sont hautes, moins le problème d'effacement du travail d'un tour précédent ne se pose. Dans ce cas, on peut obtenir un formage de l'extrémité de la douille avec un nombre réduit de dents. Une telle érection des dents ne se produit cependant que si les dents réalisées sont hautes. Malheureusement dans ce cas également, un serrage plus important est nécessaire pour garantir le maintien de la douille, ce que les clients ne souhaitent pas.

Il résulte de cette situation que le procédé de bouterollage qui est le plus économique pour réaliser les articulations élastiques ne permet pas de choisir à volonté la hauteur et le nombre de dents réalisables sur les chants d'extrémités des douilles de ces articulations. Soit ces dents sont trop nombreuses, soit elles sont trop hautes.

L'invention a pour objet de remédier à ces problèmes en remarquant que si la bouterolle pour pouvoir retrouver ses marques d'une révolution à l'autre nécessite des index nombreux, ceux-ci n'ont pas tous besoin d'être en relief mais qu'au contraire certains peuvent être réalisés en creux. On prévoit alors de munir la surface faiblement conique de la bouterolle non seulement de cavités mais aussi de dents, de manière à réaliser sur le chant d'extrémité de la douille, respectivement, des dents et des cavités. Il est alors possible que les dents de la bouterolle, provocant des cavités dans le chant d'extrémité de la douille, soient assez hautes pour assurer l'indexation de la bouterolle au cours du formage de la pièce malgré leur faible nombre. On comprend alors aisément que lors du serrage de la douille contre un flanc de tôle, ce flanc de tôle pourra s'imprimer dans les dents peu nombreuses présentes sur ce chant mais bien entendu ne pénétrera pas, ou très peu, dans les creux réalisés dans ce chant de la douille, assurant ainsi un bon contact entre cette tôle et ce chant.

L'invention concerne donc un procédé de bouterollage d'une douille dans lequel
- on réalise une douille,
- on soumet une extrémité de la douille à un bouterollage pour former sur un chant d'extrémité de cette douille des dents en relief,
caractérisé en ce que
- au cours de ce bouterollage on forme sur ce chant d'extrémité de cette douille des cavités.

L'invention a également pour objet une douille, notamment une douille pour une articulation élastique du type comportant une douille interne engagée dans un manchon élastique, un chant d'extrémité de la douille possédant des dents de serrage orientées radialement par rapport à un axe de la douille, ces dents étant en relief, caractérisé en ce que ce chant comporte des cavités intercalées avec des dents en relief.

L'invention sera mieux comprise à la lecture de la description qui suit et à l'examen des figures qui l'accompagnent. Celles-ci ne sont présentées qu'à titre indicatif et nullement limitatif de l'invention. Les figures montrent :
- Figures 1a et 1b : des vues en coupe de douilles, et plus particulièrement d'articulations élastiques, avant et après formage selon le procédé de l'invention ;
- Figure 2 : une représentation schématique d'une machine de bouterollage utilisable dans le procédé de l'invention ;
- Figure 3 : une vue de détail de l'opération de bouterollage ;
- Figures 4a à 4c : des exemples de réalisation selon l'état de la technique et selon l'invention respectivement des dents par le procédé de bouterollage ;
- Figure 5 : une représentation schématique en perspective du chant d'extrémité d'une douille d'une articulation élastique selon l'invention;
- Figure 6 : la représentation en perspective d'une bouterolle.

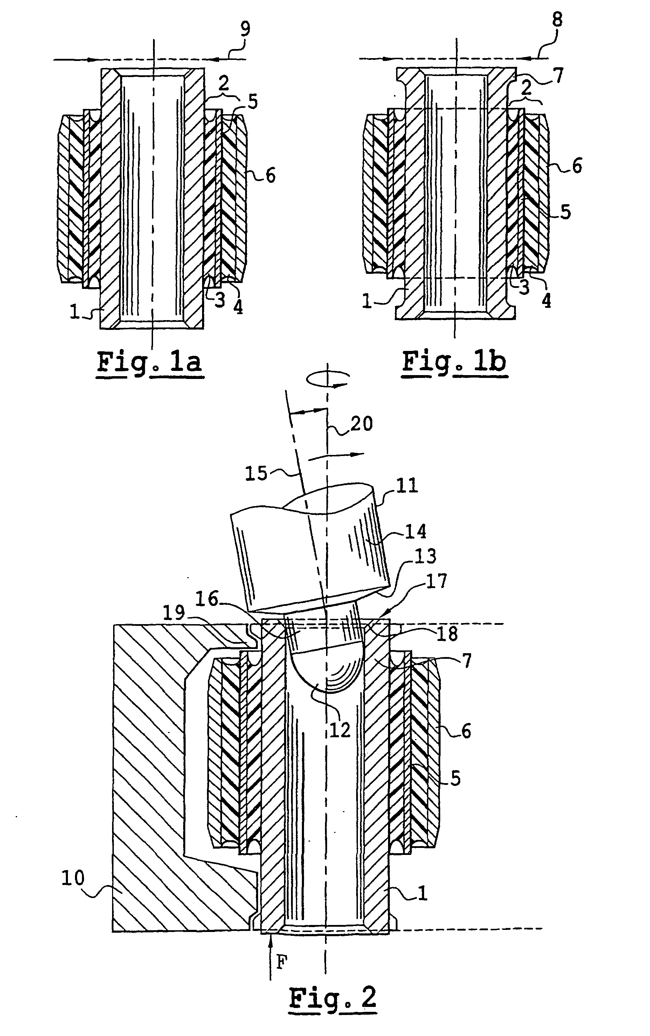

Les figures 1a et 1 b montrent des douilles, notamment des douilles pour former des articulations élastiques, respectivement avant et après formage par le bouterollage selon l'invention. Sur la figure 1a une douille interne rigide 1 est engagée dans un manchon élastique 2. Cet engagement peut avoir été réalisé au préalable selon un procédé préféré d'adhérisation décrit dans le document cité. Le manchon élastique 2 peut comporter une première enveloppe 3 et une deuxième enveloppe 4 cylindriques circulaires séparées l'une de l'autre par une armature intermédiaire 5 et être maintenu à la périphérie externe par une armature extérieure 6. La douille 1 et les armatures 5 et 6 sont de préférence en acier. Il est connu de soumettre l'armature intérieure 5 et l'armature extérieure 6 à un dudgeonnage et/ou à un rétreint par machine à choc, voire à un passage en filière qui assure la réduction diamétrale de l'armature extérieure 6, afin de comprimer la matière du manchon élastique.

La figure 1b reprend les mêmes éléments en montrant par ailleurs qu'une extrémité 7 au moins de la douille 1 a subi un épanouissement de façon à ce que le diamètre extérieur 8 à l'endroit de cet épanouissement soit supérieur à un diamètre 9 de la pièce avant formage (figure 1a). Cet épanouissement concerne la face externe de la douille 1. Il peut également concerner la face interne de cette douille 1. En agissant ainsi on augmente les qualités de fixation de la douille sur un support en un matériau moins dur que la douille 1, typiquement un flanc en tôle d'un châssis de véhicule. Cette fixation se réalise en faisant passer un boulon au travers de la douille. Cet épanouissement est de préférence réalisé après réalisation par surmoulage du manchon élastique sur la douille pour former l'articulation élastique. Un tel surmoulage préalable est préférable car il est plus simple du fait de la forme cylindrique de la douille avant bouterollage. En variante, le manchon peut être réalisé sur la douille, après bouterollage, par surmoulage, ou par emmanchement.

La figure 2 montre le procédé de bouterollage connu pour réaliser un tel épanouissement. Selon ce procédé, la douille peut être maintenue par un jeu de deux demi-matrices, en demi-coques 10 (seule la demi-matrice du côté gauche est montrée). La machine de bouterollage comporte une bouterolle 11 munie d'un téton 12 et d'une face d'appui 13 légèrement conique. La face d'appui 13 s'étend depuis la base du téton 12 jusqu'à la périphérie 14 de la bouterolle. Le téton 12 est engagé à l'intérieur de la douille 1. La bouterolle 11 tourne sur elle-même, entraînée par son axe 15 et, au cours de ses rotations, tant la face d'appui 13 qu'un montant cylindrique 16 du téton 12 roulent contre l'extrémité 7 de la douille 1. La face d'appui 13 roule contre un chant 17 de cette extrémité 7, alors que le montant 16 roule contre une extrémité 18 de l'alésage de la douille 1. Un effort F exercé sur une autre extrémité de la douille 1 vient en réaction de l'appui de la face 13. Un appui circulaire 19 des demi-matrices 10 peut venir en réaction de l'effort exercé par le montant 16. La forme de l'appui 19 des demi-matrices 10 et la forme du montant 16 peuvent être déterminantes pour la forme résultante de l'épanouissement de l'extrémité 7. En variante, les demi-matrices 10 ne sont pas présentes. Dans ce cas, un épanouissement naturel est provoqué. Dans un tel cas, la douille est par exemple maintenue à sa base par un pion de centrage, et, éventuellement, des dents de maintien qui s'impriment en réaction dans le chant inférieur de la douille.

Au cours de son roulement la bouterolle 11 tourne autour d'un axe 20 colinéaire à l'axe de la douille. L'inclinaison de l'axe 15 par rapport à l'axe 20 est sensiblement égal à l'inclinaison de la face d'appui 13 par rapport à la normale à l'axe 15 si on veut que le plan du chant 17 soit perpendiculaire à l'axe 20. En pratique la bouterolle 11 est maintenue par une enveloppe interne d'un roulement, à billes ou à aiguilles. Le roulement est lui-même maintenu de deux façons. Son enveloppe externe est placée en glissement rotatif dans un siège. Ce siège est fixé, avec une inclinaison égale à celle de la bouterolle, à un arbre principal de la bouterolle colinéaire à l'axe 20, et est entraîné par cet arbre. En rotation, l'enveloppe interne du roulement est de préférence orientée dans une direction fixe, de manière à ce qu'une même génératrice de la face 13 de la bouterolle se retrouve toujours à une même position sur le chant 17.

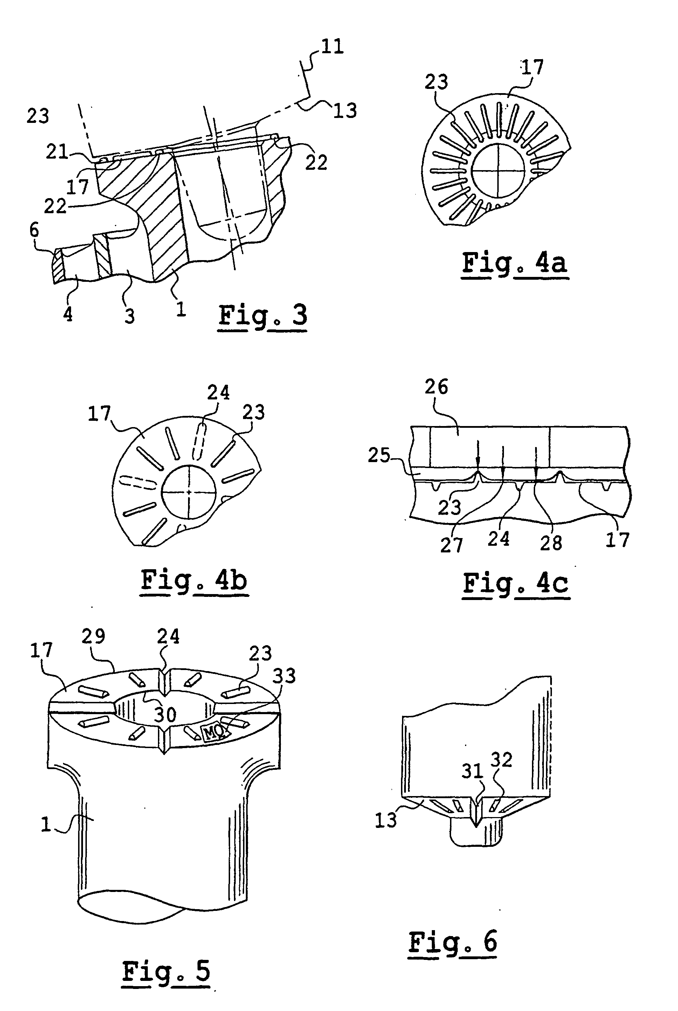

La figure 3 montre dans un exemple la réalisation en relief de nervures circulaires 21 et 22 et la réalisation de dents 23 à la surface du chant 17. Ces reliefs sont obtenus grâce à des cavités ménagées en correspondance dans la face d'appui 13 de la bouterolle 11. Autant la réalisation de nervures circulaires 21 et 22 ne souffre pas du mode de formage par une bouterolle 11, autant la réalisation des dents 23 n'est possible que si le nombre de ces dents est élevé. En effet, les origines des écrasements des dents au fur et à mesure de leur érection sont de trois types. Premièrement et principalement, l'appui de la face 13 sur le chant 17 de la douille provoque un fluage de la matière de la douille, d'une part radialement vers l'extérieur (provoquant l'épanouissement), et d'autre part circulairement dans le sens de la rotation de la bouterolle, du fait de la création d'une onde de matière (une vague) devant la génératrice d'appui de la face 13. D'un tour à l'autre, si les dents ne sont pas assez nombreuses, la bouterolle ne peut s'indexer sur les dents, la vague fluante déplaçant les dents naissantes. Deuxièmement, un glissement se produit du fait de l'existence d'un jeu nécessaire entre le téton 12 et l'alésage 18. Les circonférences d'appui sur la douille et sur la face 13 sont différentes, et conduisent à tel un glissement structurel. Troisièmement, ce dernier phénomène est amplifié si l'épanouissement ne se réalise pas à diamètre d'alésage 18 constant.

Pour éviter ces écrasements, ou pour réaliser alors un rattrapage de ce glissement, on est soit obligé d'augmenter le nombre de dents, soit obligé de prévoir des dents 23 plus hautes, de manière à ce que ces dents puissent maintenir en permanence en correspondance la position de la bouterolle 11 et de l'extrémité 7, à la manière d'un engrenage.

Une telle solution conduit, figure 4a, à disposer d'un chant 17 muni de nombreuses dents telles que 23, il y en a 24 dans l'exemple. A l'opposé, figure 4b, dans l'invention on veut limiter le nombre de dents. Dans ce but, on intercale avec les dents telles que 23 des cavités telles que 24 sur le chant 17. La figure 4c montre alors en coupe, au moment du montage de la douille 1 contre un flanc de tôle 25 l'effet de serrage provoqué par un boulon ou un écrou 26 avec ou sans rondelle d'appui. Le boulon 26 repousse le flanc 25 contre le chant 17. On observe que les dents 23 pénètrent dans le flanc de tôle 25 alors qu'à côté de ces dents 23, le flanc de tôle 25 peut venir au contact de ce chant 17 par des appuis 27 et 28. Compte tenu de la largeur de la cavité 24 et de l'effort exercé par le boulon 26 il est possible qu'une partie du matériau de la tôle 25 flue dans la cavité 24. Cependant un tel fluage, minime n'aura pas pour effet d'affaiblir le flanc de tôle 25. Par comparaison on comprend bien que si les dents 23 avaient été trop rapprochées les unes des autres, les appuis 27 et 28 n'auraient pu s'exercer, et la pression au sommet de chaque dent 23 aurait été réduit.

Sur la figure 4b qui n'est qu'un exemple, on observe que le nombre total des dents 23 et des cavités 24 est ainsi réduit de moitié par rapport au nombre des dents présentes sur la figure 4a. De plus, une dent sur trois est remplacée par une cavité ce qui conduit le chant 17 à porter 8 dents et 4 cavités. La répartition des dents pourrait encore être différente. Soit les dents pourraient être intercalées exactement avec des cavités (4 pour 4), soit les écarts entre dents pourraient être réguliers, malgré la présence des cavités. La solution ainsi présentée représente un bon compromis entre un nombre faible de dents (8 au lieu de 24) compte tenu d'une dureté donnée du matériau de la douille 1.

La figure 5 montre en perspective une réalisation préférée du chant 17. Il comporte ainsi huit dents telles que 23 accolées dans des groupes de deux dents, les groupes étant séparés les uns des autres par des cavités telles que 24. Les cavités 24 et les dents 23 sont de préférence radiales et non débouchantes. C'est-à-dire qu'elles n'aboutissent pas à la périphérie 29 du chant 17. Elles ont cette particularité notamment pour des raisons d'étanchéité. Leur extension est ainsi limitée de manière à ne pas parvenir ni à cette périphérie 29 ni à une périphérie intérieure 30 du chant 17. Cette particularité est montrée ici pour les dents seulement, pas pour les cavités.

La figure 6 montre en correspondance l'allure de la face d'appui 13 de la bouterolle munie de dents 31 correspondant aux cavités 24, et de cavités 32 correspondant aux dents 23. Comme indiqué ci-dessus, il n'est pas nécessaire que la hauteur des dents 31 soit de même ordre que la profondeur des cavités 32. Au contraire, il peut être préférable, pour des raisons de facilité d'indexation, que la hauteur des dents 31 soit supérieure à la profondeur des cavités 32. De ce fait, les dents 23 seront alors moins hautes que les cavités 24 ne seront profondes. De même, les profils des dents et cavités ne sont pas nécessairement similaires. Ces profils seront déterminés par la fonction à réaliser. En effet, le but des dents 23 est de s'imprimer dans la tôle 25. Le but des cavités 24 est de concourir à une meilleure indexation de la bouterolle par effet d'engrenage. Le profil des dents 23 sera alors de préférence le profil décrit dans le document cité, le profil des cavités 24 dans le sens circulaire pouvant être triangulaire. Dans cet exemple, un angle au sommet de ce profil de cavité est plus faible que l'angle au sommet des dents 23.

En outre, du fait de la qualité de l'indexation ainsi réalisée, il est possible de munir la bouterolle de cavités ou de protubérances aptes à réaliser une inscription, un marquage 33, à la place ou en plus des dents 23, sur le chant 17 ou sur l'extrémité 18 de l'alésage de la douille.

On notera enfin qu'une douille de ce type avec peu de dents et des cavités est néanmoins bien adaptée à une indexation.

## Revendications

1. Procédé de bouterollage d'une douille dans lequel
- on réalise une douille (1),
- on soumet une extrémité (7) de la douille à un bouterollage (11) pour former sur un chant (17) d'extrémité de cette douille des dents (23) en relief,
**caractérisé en ce que**
- au cours de ce bouterollage on forme sur ce chant d'extrémité de cette douille des cavités (24).

2. Procédé selon la revendication 1, **caractérisé en ce que**
- au cours de ce bouterollage on forme un épanouissement (8) à une extrémité de la douille dont le chant est muni de ces dents.

3. Procédé selon l'une des revendications 1 à 2, **caractérisé en ce que**
- on se sert de ces cavités pour réaliser un marquage fin.

4. Procédé selon l'une des revendication 1 à 3, **caractérisé en ce que**
- on réalise un manchon élastique sur la douille, avant le bouterollage, pour former une articulation élastique.

5. Douille (1) comportant un chant (17) d'extrémité de la douille possédant des dents de serrage orientées radialement par rapport à un axe de la douille, ces dents étant en relief, **caractérisée en ce que** ce chant comporte des cavités (24) intercalées avec des dents en relief.

6. Douille selon la revendication 5, **caractérisée en ce qu'**elle possède un épanouissement à une extrémité dont le chant est muni de ces dents.

7. Douille selon l'une des revendications 5 à 6, **caractérisée en ce que** l'épanouissement et ou les dents en reliefs et en creux sont obtenus par une bouterolle.

8. Douille selon l'une des revendications 5 à 7, **caractérisée en ce que** les cavités possèdent une orientation radiale.

9. Douille selon l'une des revendications 5 à 8, **caractérisée en ce que** des dents et ou les cavités ne sont pas débouchantes (29, 30).

10. Douille selon l'une des revendications 5 à 9, **caractérisée en ce qu'**elle comporte un manchon élastique engagé sur la douille et muni d'une armature intermédiaire (5) cylindrique et de deux enveloppes élastiques (3, 4) engagées sur une face et sur une autre de cette armature intermédiaire.

11. Douille selon l'une des revendications 5 à 10, **caractérisée en ce que** le chant comporte huit dents en relief et quatre dents en creux.

12. Douille selon l'une des revendications 5 à 11, **caractérisée en ce que** les cavités possèdent dans le sens circulaire un profil triangulaire avec un angle au sommet plus faible que l'angle au sommet du profil des dents.

13. Douille selon l'une des revendications 5 à 12, **caractérisée en ce que** le chant de la douille comporte un marquage (33).

## Patentansprüche

1. Verfahren zum Aufweiten einer Buchse, bei dem
- eine Buchse (1) realisiert wird,
- ein Ende (7) der Buchse einem Aufweiten (11) unterzogen wird, um an einem Endrand (17) eines Endes dieser Buchse erhabene Zähne (23) zu bilde;
**dadurch gekennzeichnet, daß**
- im Verlauf dieses Aufweitens am Endrand dieser Buchse Vertiefungen (24) gebildet werden;

2. Verfahren nach Anspruch 1, **dadurch gekennzeichnet, daß**
- im Verlauf dieses Aufweitens eine Ausbauchung (8) an einem Ende der Buchse gebildet wird, deren Rand mit den Zähnen versehen ist.

3. Verfahren nach einem der Ansprüche 1 bis 2, **dadurch gekennzeichnet, daß**
- die Vertiefungen zum Abschlußmarkieren dienen.

4. Verfahren nach einem der Ansprüche 1 bis 3, **dadurch gekennzeichnet, daß**
- vor dem Aufweiten an der Buchse eine elastische Muffe realisiert wird, um ein elastisches Gelenk zu bilden.

5. Buchse (1) mit einem Endrand (17) der Buchse, welcher in Bezug auf eine Achse der Buchse radial ausgerichtete Klemmzähne aufweist, **dadurch gekennzeichnet, daß** der Endrand Vertiefungen (24) aufweist, die zwischen den Klemmzähnen eingebracht sind.

6. Buchse nach Anspruch 5, **dadurch gekennzeichnet, daß** sie an einem Ende, dessen Rand mit Zähnen versehen ist, eine Ausbauchung aufweist.

7. Buchse nach einem Ansprüche 5 bis 6, **dadurch gekennzeichnet, daß** die Ausbauchung und/oder die erhabenen und vertieften Zähne durch eine Bouterole gebildet sind.

8. Buchse nach einem der Ansprüche 5 bis 7, **dadurch gekennzeichnet, daß** die Vertiefungen eine radiale Ausrichtung aufweisen.

9. Buchse nach einem der Ansprüche 5 bis 8, **dadurch gekennzeichnet, daß** sich die Zähne und/oder die Vertiefungen nicht treffen.

10. Buchse nach einem der Ansprüche 5 bis 9, **dadurch gekennzeichnet, daß** sie eine elastische Muffe umfaßt, die mit der Buchse verbunden und mit einer zylindrischen Zwischenarmatur (5) und zwei elastischen Umhüllungen (3, 4) versehen ist, die an einer Seite oder einer anderen Seite der Zwischenarmatur eingreifen.

11. Buchse nach einem der Ansprüche 5 bis 10, **dadurch gekennzeichnet, daß** der Rand acht erhabene Zähne und vier vertiefte Zähne umfaßt.

12. Buchse nach einem der Ansprüche 5 bis 11, **dadurch gekennzeichnet, daß** die Vertiefungen in Kreisrichtung ein dreieckiges Profil mit einem Winkel am oberen Ende aufweisen, der kleiner ist als der Winkel am oberen Ende des Profils der Zähne.

13. Buchse nach einem der Ansprüche 5 bis 12, **dadurch gekennzeichnet, daß** der Rand der Buchse eine Markierung (33) umfaßt.

## Claims

1. A method of heading a bush, wherein
- a bush (1) is made,
- one end (7) of the bush is subjected to heading (11) to form teeth (23) in relief on one end edge (17) of said bush,
**characterised in that**
- cavities (24) are formed on said end edge of said bush during said heading.

2. A method according to claim 1, **characterised in that**
- during said heading a flaring (8) is formed at one end of the bush whose edge is provided with said teeth.

3. A method according to claim 1 or 2, **characterised in that**
- said cavities are used to provide a fine marking.

4. A method according to any one of claims 1 to 3, **characterised in that**
- an elastic sleeve is formed on the bush, before the heading operation, in order to form an elastic articulation.

5. A bush (1) comprising an end edge (17) of the bush having locking teeth oriented radially with respect to an axis of the bush, said teeth being in relief, **characterised in that** said edge has cavities (24) interposed with teeth in relief.

6. A bush according to claim 5, **characterised in that** it has a flaring at one end whose edge is provided with said teeth.

7. A bush according to claim 5 or 6, **characterised in that** the flaring and/or the teeth in relief and/or sunken are obtained by a rivet set.

8. A bush according to any one of claims 5 to 7, **characterised in that** the cavities have a radial orientation.

9. A bush according to any one of claims 5 to 8, **characterised in that** some teeth and/or the cavities do not open out (29, 30).

10. A bush according to any one of claims 5 to 9, **characterised in that** it comprises an elastic sleeve engaged over the bush and provided with an intermediate cylindrical framework (5) and two elastic jackets (3, 4) engaged over one surface and over another of said intermediate framework.

11. A bush according to any one of claims 5 to 10, **characterised in that** the edge comprises eight teeth in relief and four sunken teeth.

12. A bush according to any one of claims 5 to 11, **characterised in that** the cavities have in the circular direction a triangular profile with an apex angle smaller than the apex angle of the profile of the teeth.

13. A bush according to any one of claims 5 to 12, **characterised in that** the bush edge has a marking (33).
